(19) Europäisches Patentamt
European Patent Office
Office européen des brevets

(11) EP 3 529 840 B1

(12) **EUROPEAN PATENT SPECIFICATION**

(45) Date of publication and mention of the grant of the patent:
**16.10.2024 Bulletin 2024/42**

(21) Application number: **17784301.8**

(22) Date of filing: **18.10.2017**

(51) International Patent Classification (IPC):
***C09D 127/16*** *(2006.01)* ***C08L 27/12*** *(2006.01)*
***C08L 27/16*** *(2006.01)* ***H01M 4/04*** *(2006.01)*
***H01M 4/62*** *(2006.01)* ***H01M 50/403*** *(2021.01)*
***H01M 50/426*** *(2021.01)* ***H01M 50/449*** *(2021.01)*
***H01M 50/44*** *(2021.01)*

(52) Cooperative Patent Classification (CPC):
(C-Sets available)
**H01M 4/623; C08L 27/12; C08L 27/16; C09D 127/16; H01M 4/0404; H01M 50/403; H01M 50/426; H01M 50/44; H01M 50/449;**
Y02E 60/10 (Cont.)

(86) International application number:
**PCT/EP2017/076536**

(87) International publication number:
**WO 2018/073277 (26.04.2018 Gazette 2018/17)**

(54) **PVDF FOR METAL/METAL ION BATTERIES**

PVDF-METALL-/METALLIONENBATTERIEN

PVDF POUR BATTERIES À ION MÉTAL/MÉTAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.10.2016 EP 16194835**

(43) Date of publication of application:
**28.08.2019 Bulletin 2019/35**

(73) Proprietor: **Solvay Specialty Polymers Italy S.p.A.**
**20021 Bollate (MI) (IT)**

(72) Inventors:
- **ABUSLEME, Julio A.**
  **21047 Saronno (Varese) (IT)**
- **PIERI, Riccardo**
  **20122 Milano (IT)**
- **SPREAFICO, Marco Alberto**
  **20017 Rho (MI) (IT)**

(74) Representative: **Benvenuti, Federica**
**SyensQo S.A.**
**Intellectual Assets Management**
**98, rue de la Fusée**
**1130 Bruxelles (BE)**

(56) References cited:
**EP-A1- 2 634 836** **US-A1- 2002 197 536**
**US-A1- 2010 133 482** **US-A1- 2013 264 522**
**US-A1- 2014 154 573** **US-A1- 2017 179 456**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09D 127/16, C08L 27/16**

## Description

### Cross-reference to related applications

### Technical Field

The present invention pertains to vinylidene fluoride copolymers comprising recurring units derived from hydrophilic (meth)acrylic monomers and fluoro monomers compositions, and to their use in the manufacturing of battery components, such as membrane separators and electrode binders, to said battery components and to electrochemical devices comprising said components.

### Background Art

Fluoropolymers are known in the art to be suitable as binders for the manufacture of electrodes and as separator coatings for the manufacture of composite separators for use in electrochemical devices such as secondary batteries.

Generally, techniques for manufacturing either positive or negative electrodes and also for coating separators involve the use of organic solvents for dissolving the fluoropolymer.

In the case of the manufacture of electrodes, the role of the organic solvent is typically to dissolve the fluoropolymer in order to bind the electro-active material particles to each other and to the metal collector upon evaporation of the organic solvent.

The fluoropolymer binder should properly bind the electro-active material particles to each other and to the metal collector so that these particles can chemically withstand large volume expansion and contraction during charging and discharging cycles.

In the manufacture of separators, a precursor solution is typically formulated as an ink or paste comprising a solid particulate material dispersed in a solution of a fluoropolymer binder in a suitable solvent.

The ink solution so obtained is usually disposed onto a surface of a non-coated inert support and the solvent is then removed from the solution layer to deposit a separator layer which adheres to the inert support. A solvent system is typically used to disperse the polymer binder, which generally comprises N-methyl pyrrolidone (NMP) or mixtures of N-methyl pyrrolidone and a diluting solvent such as acetone, propyl acetate, methyl ethyl ketone and ethyl acetate.

PVDF is the most widely used fluoropolymer in electrode binders. For instance, US 2002/0197536 (SAMSUNG SDI CO. LTD.) 12/26/2002 discloses a polymeric electrolyte for use in lithium batteries comprising a vinylidene fluoride-hexafluoropropylene copolymer or a copolymer further comprising recurring units of at least one compound selected from the group consisting of acrylic acid and maleic acid monoalkylester.

Requirements to assure the good performance of an electrode are the good adhesion of the electrode towards the current collector and the good flexibility of the resulting electrode.

Similarly, a separator having a good adhesions of the coating onto the inert support and a good flexibility assures good performances.

This is of particular importance in applications, such as flexible batteries, wherein the electrochemical device components must be able to withstand bending while maintaining an excellent adhesion to guarantee cell operation.

For obtaining a good quality electrode deposited on the current collector a low viscosity electrode slurry is desired. This makes the manufacturing process easier.

### Summary of invention

It has been now surprisingly found that electrodes and separator with the desired properties described above are suitably provided by using a combination of at least two fluoropolymers having two distinctive characteristics.

In a first instance, the present invention pertains to a composition (C) comprising:

- at least one semi-crystalline fluoropolymer [polymer (F1)] comprising recurring units derived from vinylidene fluoride (VDF) in an amount of at least 50 % by mole with respect to the total moles of recurring units of polymer (F1), and recurring units derived from at least one hydrophilic (meth)acrylic monomer (MA) of formula (I):

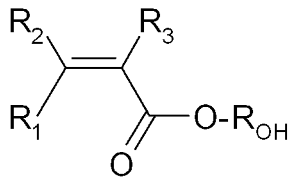

(I)

wherein:

- $R_1$, $R_2$ and $R_3$, equal to or different from each other, are independently selected from a hydrogen atom and a $C_1$-$C_3$ hydrocarbon group, and
- $R_{OH}$ is a hydrogen atom or a $C_1$-$C_5$ hydrocarbon moiety comprising at least one hydroxyl group,
  in an amount of at least 0.1 % by mole, preferably at least 0.3 % by mole, even more preferably at least 0.5 % by mole, and not more than 5 % by mole with respect to the total moles of recurring units of polymer (F1), said polymer (F1) having an intrinsic viscosity measured in dimethylformamide at 25 °C higher than 1.4 dl/g, preferably higher than 2 dl/g, even more preferably higher than 2.5 dl/g and lower than 5 dl/g; and
- at least one fluoropolymer [polymer (F2)], different from (F1), comprising recurring units derived from vinylidene fluoride (VDF) in an amount of at least 50 % by mole with respect to the total moles of recurring units of polymer (F2), and recurring units derived from at least one fluorinated monomer (FM) different from vinylidene fluoride in an amount of between 2.5 % by mole and 10% by mole % respect to the total moles of recurring units of polymer (F2), wherein polymer (F1) forms at least the 10% by weight over the total weight of the composition (C) and polymer (F2) forms at most 90% by weight over the total weight of the composition (C).

In another aspect, the present invention provides a process for the preparation of the composition (C) as above detailed.

In a further aspect, the present invention provides a process for the preparation of an electrode comprising the steps of:

i. providing a metal substrate possessing two surfaces;
ii. providing a composition (C) comprising at least one polymer (F1) and at least one polymer (F2) in mixture with a liquid medium (L1) comprising a non-aqueous solvent;
iii. forming an electrode slurry mixture comprising:

- the liquid composition of step ii), and
- at least one electro-active compound;

iv. coating at least one surface of the metal substrate of step (i) with the electrode slurry mixture of step iii.;
v. drying the coated metal substrate obtained in step iv..

In still another aspect, the present invention provides a method for the manufacture of a composite separator, notably suitable for use in an electrochemical device, said method comprising the following steps:

I. providing a porous substrate having at least one surface;
II. providing a composition (C), as defined above;
III. applying said composition (C) onto at least one surface of said porous substrate to provide a coating composition layer; and
IV. drying the coating composition layer obtained in step III. at a temperature of at least 60°C.

The present invention further provides electrodes and separators for electrochemical devices comprising the composition (C) as defined above, and electrochemical devices comprising the same.

**Description of embodiments**

The Applicant has surprisingly found that electrochemical device components prepared by the use of the composition (C) as above detailed possess improved flexibility while maintaining an excellent adhesion to metal current collectors and to separators.

Furthermore, electrode slurry mixtures comprising the composition of the invention are characterized by a lower viscosity in comparison with slurries prepared by the use of compositions comprising exclusively a semi-crystalline

fluoropolymer, which makes the coating of the current collectors easier.

Unless otherwise specified, in the context of the present invention the amount of a component in a composition is indicated as the ratio between the weight of the component and the total weight of the composition multiplied by 100 (also: "wt%").

As used herein, the term "semi-crystalline" means a fluoropolymer that has, besides the glass transition temperature Tg, at least one crystalline melting point on DSC analysis. For the purposes of the present invention a semi-crystalline fluoropolymer is hereby intended to denote a fluoropolymer having a heat of fusion of from 10 to 90 J/g, preferably of from 30 to 80 J/g, more preferably of from 35 to 75 J/g, as measured according to ASTM D3418-08.

As used herein, the terms "adheres" and "adhesion" indicate that two layers are permanently attached to each other via their surfaces of contact, e.g. classified as 5B to 3B in the cross-cut test according to ASTM D3359, test method B.

As used herein, the term "electrode" indicates a layer comprising a binder, generally formed of polymeric materials, and an electro-active compound.

For the purpose of the present invention, the term "electro-active compound" is intended to denote a compound which is able to incorporate or insert into its structure and substantially release therefrom alkaline or alkaline-earth metal ions during the charging phase and the discharging phase of an electrochemical device. The electro-active compound is preferably able to incorporate or insert and release lithium ions.

By the term "separator", it is hereby intended to denote a porous polymeric material which electrically and physically separates electrodes of opposite polarities in an electrochemical device and is permeable to ions flowing between them.

By the term "electrochemical device", it is hereby intended to denote an electrochemical cell comprising a positive electrode, a negative electrode and a liquid electrolyte, wherein a monolayer or multilayer separator is adhered to at least one surface of one of said electrodes.

Non-limitative examples of suitable electrochemical devices include, notably, secondary batteries, especially, alkaline or an alkaline-earth secondary batteries such as lithium ion batteries, and capacitors, especially lithium ion-based capacitors and electric double layer capacitors ("supercapacitors").

For the purpose of the present invention, by "secondary battery" it is intended to denote a rechargeable battery. Non-limitative examples of secondary batteries include, notably, alkaline or alkaline-earth secondary batteries.

By the term "recurring unit derived from vinylidene difluoride" (also generally indicated as vinylidene fluoride 1,1-difluoroethylene, VDF), is intended to denote a recurring unit of formula (I):

$$CF_2=CH_2.$$

The hydrophilic (meth)acrylic monomer (MA) preferably complies with formula (II) here below:

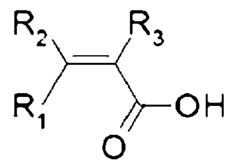

(II)

wherein each of $R_1$, $R_2$ and $R_3$, equal to or different from each other, is independently a hydrogen atom or a $C_1$-$C_3$ hydrocarbon group.

Non-limitative examples of hydrophilic (meth)acrylic monomers (MA) include, notably:

- acrylic acid (AA)
- (meth)acrylic acid,
- hydroxyethyl(meth)acrylate (HEA) of formula:

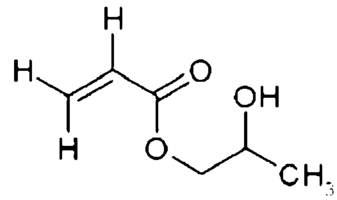

,

- 2-hydroxypropyl acrylate (HPA) of formula:

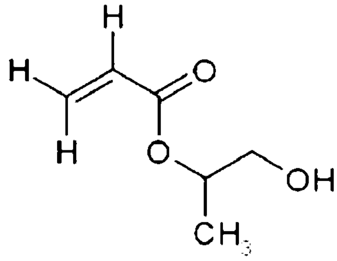

,

- hydroxyethylhexyl(meth)acrylate, and mixtures thereof.

Still more preferably, the hydrophilic (meth)acrylic monomer (MA) is acrylic acid (AA).

By the term "fluorinated monomer (FM)" it is hereby intended to denote an ethylenically unsaturated monomer comprising at least one fluorine atom.

In the rest of the text, the expression "fluorinated monomers" is understood, for the purposes of the present invention, both in the plural and the singular, that is to say that they denote both one or more than one fluorinated monomers as defined above.

Should the fluorinated monomer (FM) comprise at least one hydrogen atom, it is designated as hydrogen-containing fluorinated monomer.

Should the fluorinated monomer (FM) be free of hydrogen atoms, it is designated as per(halo)fluorinated monomer.

The fluorinated monomer (FM) may further comprise one or more other halogen atoms (Cl, Br, I).

Non-limiting examples of suitable fluorinated monomers (FM) include, notably, the followings:

- $C_2$-$C_8$ perfluoroolefins such as tetrafluoroethylene and hexafluoropropylene (HFP);
- $C_2$-$C_8$ hydrogenated fluoroolefins such as vinyl fluoride, 1,2-difluoroethylene and trifluoroethylene;
- perfluoroalkylethylenes of formula $CH_2$=CH-$R_{f0}$ wherein $R_{f0}$ is a $C_1$-$C_6$ perfluoroalkyl;
- chloro- and/or bromo- and/or iodo-$C_2$-$C_6$ fluoroolefins such as chlorotrifluoroethylene;
- (per)fluoroalkylvinylethers of formula $CF_2$=$CFOR_{f1}$ wherein $R_{f1}$ is a $C_1$-$C_6$ fluoro- or perfluoroalkyl, e.g. $CF_3$, $C_2F_5$, $C_3F_7$;
- $CF_2$=$CFOX_0$ (per)fluoro-oxyalkylvinylethers wherein $X_0$ is a $C_1$-$C_{12}$ alkyl group, a $C_1$-$C_{12}$ oxyalkyl group or a $C_1$-$C_{12}$ (per)fluorooxyalkyl group having one or more ether groups, such as perfluoro-2-propoxy-propyl group;
- (per)fluoroalkylvinylethers of formula $CF_2$=$CFOCF_2OR_{f2}$ wherein $R_{f2}$ is a $C_1$-$C_6$ fluoro- or perfluoroalkyl group, e.g. $CF_3$, $C_2F_5$, $C_3F_7$ or a $C_1$-$C_6$ (per)fluorooxyalkyl group having one or more ether groups such as -$C_2F_5$-O-$CF_3$;
- functional (per)fluoro-oxyalkylvinylethers of formula $CF_2$=$CFOY_0$ wherein $Y_0$ is a $C_1$-$C_{12}$ alkyl group or (per)fluoroalkyl group, a $C_1$-$C_{12}$ oxyalkyl group or a $C_1$-$C_{12}$ (per)fluorooxyalkyl group having one or more ether groups and $Y_0$ comprising a carboxylic or sulfonic acid group, in its acid, acid halide or salt form;
- fluorodioxoles, preferably perfluorodioxoles.

The fluorinated monomer (FM) is preferably hexafluoropropylene (HFP).

The inventors have found that best results are obtained when the polymer (F1) is a linear semi-crystalline co-polymer.

The term "linear" is intended to denote a co-polymer made of substantially linear sequences of recurring units

from (VDF) monomer and (MA) monomer; polymer (F1) is thus distinguishable from grafted and/or comb-like polymers.

Determination of mole percentage of recurring units derived from at least one functional hydrogenated monomer in the polymer (F1) can be performed by any suitable method. Mention can be notably made of acid-base titration methods or NMR methods.

The polymer (F1) more preferably comprises recurring units derived from:

- at least 50% by moles, preferably at least 75% by moles, more preferably at least 85% by moles of vinylidene fluoride (VDF),
- from 0.1% to 5% by moles, preferably from 0.3% to 1.5% by moles, more preferably from 0.5% to 1% by moles of at least one hydrophilic (meth)acrylic monomer (MA).

The polymer (F1) is typically obtainable by emulsion polymerization or suspension polymerization of at least one vinylidene difluoride monomer and at least one hydrophilic (meth)acrylic monomer.

The polymer (F2) is typically obtainable by emulsion polymerization or suspension polymerization of at least one vinylidene difluoride monomer and at least one fluorinated monomer (FM).

In the case polymer (F2) contains recurring units derived from at least one hydrophilic (meth)acrylic monomer (MA), said recurring units (MA) are preferably comprised in an amount at least 0.05 % by moles, more preferably at least 0.1% by moles, even more preferably at least 0.2%, and at most 10% by moles, more preferably at most 7.5% by moles, even more preferably at most 3% by moles with respect to the total moles of recurring units of polymer (F2).

The inventors have found that a substantially random distribution of monomer (MA) within the polyvinylidene fluoride backbone of polymer (F1) advantageously maximizes the effects of the monomer (MA) on both adhesiveness and/or hydrophilic behaviour of the resulting copolymer, even at low levels of monomer (MA) in the composition, without impairing the other outstanding properties of the vinylidene fluoride polymers, e.g. thermal stability and mechanical properties.

At least another fluorinated monomer (FM2) different from (FM) and of VDF may be included in polymers (F1) and (F2).

Such monomer (FM2) can include at least one conventionally used monomer copolymerizable with vinylidene fluoride, such as, but not limited to, vinyl fluoride, trifluoroethylene, trifluorochloroethylene (CTFE), tetrafluoroethylene (TFE), hexafluoropropylene (HFP), and fluoroalkyl vinyl ether and their mixtures.

The amount of monomer (FM2) in polymer (F1) and in polymer (F2) is preferably below 10 mol%, more preferably below 5 mol% or below 2 mol% over the total number of moles of recurring units in polymer (F1) or polymer (F2), respectively.

In a preferred embodiment of the invention, (F1) is a copolymer of VDF-MA in which the content of hydrophilic (meth)acrylic monomer of formula (I) is comprised in an amount of between 0.3 to 1.5 mole% with respect to the total moles of recurring units of polymer (F1).

More preferably, the hydrophilic (meth)acrylic monomer (MA) is a hydrophilic (meth)acrylic monomer of formula (II), still more preferably it is acrylic acid (AA), and (F1) is a VDF-AA copolymer.

In a preferred embodiment of the invention, (F2) is a copolymer of VDF with a fluorinated monomer, wherein

the fluorinated monomer (FM) is hexafluoropropylene (HFP) and (F2) is a VDF-HFP copolymer.

In composition (C) polymer (F1) preferably forms at least the 25% by weight over the total weight of composition (C), and polymer (F2) forms at most 75% by weight over the total weight of composition (C).

Composition (C) is typically provided in the form of powder.

In another aspect, the present invention provides a process for the preparation of the composition (C) as above detailed, said process comprising the step of mixing the at least one polymer (F1) with the at least one polymer (F2).

In a preferred embodiment of the present invention, polymer (F2) has an intrinsic viscosity measured in dimethylformamide at 25°C which is lower than that of polymer (F1), preferably lower than 2 dl/g, more preferably lower than 1.7 dl/g.

In a further aspect, the present invention provides a process for the preparation of an electrode comprising the steps of:

i. providing a metal substrate possessing two surfaces;
ii. providing a composition (C) comprising at least one polymer (F1) and at least one polymer (F2) in mixture with a liquid medium (L1) comprising a non-aqueous solvent;
iii. forming an electrode slurry mixture comprising:

- the liquid composition of step ii), and
- at least one electro-active compound;

iv. coating at least one surface of the metal substrate of step (ii) with the electrode slurry mixture of step iii.;
v. drying the coated metal substrate obtained in step iv..

The metal substrate is generally a foil, mesh or net made of a metal such as copper, aluminum, iron, stainless steel, nickel, titanium or silver.
Generally, techniques for manufacturing an electrode involve the use of solvents, e.g. organic solvents, such as N-methyl-2-pyrrolidone (NMP), for dissolving VDF polymer binders and homogenizing them with a powdery electrode material and all other suitable components to produce a paste to be applied to a metal collector (e.g. an aluminium collector). Non-limiting examples of electrodes and methods for their manufacturing are described in WO 2013/010936 A (SOLVAY SPECIALTY POLYMERS ITALY) 1/24/2013, and references cited therein.
Under step ii. of the process of the invention, suitable non-aqueous solvents include, notably, the followings: N-methyl-2-pyrrolidone (NMP), N,N-dimethylformamide, N,N-dimethylacetamide, dimethylsulfoxide, hexamethylphosphamide, dioxane, tetrahydrofuran, tetramethylurea, triethyl phosphate, trimethyl phosphate and mixtures thereof.
Under step iii. of the process of the invention, the electrode slurry mixture may further comprise:

- at least one conductive agent,
- at least one additive, and
- at least one modifying viscosity agent.

Non-limitative examples of suitable additives include, notably, electroconductivity-imparting additives and/or thickeners.
In step iv. of the process of the invention, the electrode slurry mixture provided by step iii. is applied onto at least one surface of a metal substrate by techniques commonly known in the art such as by casting, brush, roller, ink jet, squeegee, foam applicator, curtain coating, vacuum coating, spraying.
In still another aspect, the present invention provides a method for the manufacture of a composite separator notably suitable for use in an electrochemical device, said method comprising the following steps:

I. providing a porous substrate having at least one surface;
II. providing a composition (C), as defined above;
III. applying said composition (C) onto at least one surface of said porous substrate to provide a coating composition layer; and
IV. drying said coating composition layer at a temperature of at least 60°C, to provide said composite separator.

In step III. of the method of the invention, the composition (C) is typically applied onto at least one surface of the porous substrate by a technique selected from casting, spray coating, roll coating, doctor blading, slot die coating, gravure coating, inkjet printing, spin coating and screen printing, brush, squeegee, foam applicator, curtain coating, vacuum coating.
Non-limitative examples of suitable porous substrate include, notably, porous membranes made from inorganic, organic and naturally occurring materials, and in particular made from nonwoven fibers (cotton, polyamides, polyesters, glass), from polymers (polyethylene, polypropylene, poly(tetrafluoroethylene), poly(vinyl chloride), and from certain fibrous naturally occurring substances (e.g. asbestos).
Advantageous results have been obtained when the porous support was a polyolefin porous support, e.g. a polyethylene or a polypropylene porous support.
In step V. of the process of the invention, the coating composition layer is dried.
Drying temperature is typically comprised between 60°C and 200°C, preferably between 70°C and 180°C.
Should the disclosure of any patents, patent applications, and publications which are incorporated herein by reference conflict with the description of the present application to the extent that it may render a term unclear, the present description shall take precedence.
The invention will be now described with reference to the following examples, whose purpose is merely illustrative and not intended to limit the scope of the invention.

**EXPERIMENTAL PART**

**Raw materials**

Polymer (F1): VDF-AA (0.9% by moles) polymer having an intrinsic viscosity of 3.0 dl/g in DMF at 25°C (hereinafter Polymer (F1)-A).
Polymer (F1): VDF-AA (0.6% by moles) polymer having an intrinsic viscosity of 3.8 dl/g in DMF at 25°C (hereinafter Polymer (F1)-B).

Polymer (F2): VDF-HFP (7% by moles) polymer having an intrinsic viscosity of 1.4 dl/g in DMF at 25°C.

**Determination of intrinsic viscosity of the polymer (in DMF at 25°C)** Intrinsic viscosity [η] was determined using the following equation on the basis of the dropping time, at 25°C, of a solution obtained by dissolving polymer (F1) or polymer (F2) in dimethylformamide at a concentration of about 0.2 g/dl, in an Ubbelhode viscosimeter:

$$[\eta] = \frac{\eta_{sp} + \Gamma \cdot \ln \eta_r}{(1+\Gamma) \cdot c}$$

where c is polymer concentration in g/dl;
ηr is the relative viscosity, i.e. the ratio between the dropping time of sample solution and the dropping time of solvent;
ηsp is the specific viscosity, i.e. ηr -1;
Γ is an experimental factor, which corresponds to 3.

### Example 1: Preparation of composition (C) according to the invention

Four compositions comprising different amounts of polymer (F1)-A or polymer (F1)-B and polymer (F2) were prepared in a Henschel mixer, model FML 40 with a command of MINICON S210, for 5 min at 1500rpm. The powders were all charged at room temperature.

Composition (a) comprises 55% by weight of polymer (F1)-A and 45% by weigh of polymer (F2) with respect to the total weight of the composition. Composition (b) comprises 70% by weight of polymer (F1)-A and 30% by weigh of polymer (F2) with respect to the total weight of the composition. Composition (c) comprises 85% by weight of polymer (F1)-A) and 15% by weigh of polymer (F2) with respect to the total weight of the composition. Composition (d) comprises 30% by weight of polymer (F1)-B and 70% by weigh of polymer (F2) with respect to the total weight of the composition

### Preparation of the electrode slurry mixture

Electrode slurry mixtures were prepared by dissolving, respectively, 1 gram of powder of composition (a), of composition (b), of composition (c), of composition (d), of polymer (F1)-A, of polymer (F1)-B and of polymer (F2) in 25 grams of NMP under stirring at room temperature, obtaining clear solutions. Under moderate stirring, using a Dispermat mixing device, 1 gram of carbon black (C-NERGY Super C65 from Imerys) and 18 grams of $LiCoO_2$ (Cellcore® LCO D10 from Umicore) were added and the slurries were thoroughly mixed to ensure a good homogeneity.

The percentage of solid in the electrode slurries was of 40% by weight, the composition (C) representing the 5% by weight of the total solid components, carbon black being the 5% by weight and $LiCoO_2$ being the 90% by weight.

### Slurry viscosity

This was measured using a rotational rheometer Model Rheolab® QC from Anton Paar. The measurements were performed at 25°C. The viscosity values are reported at a shear rate of 46,1 $s^{-1}$.

### Preparation of the electrodes

The cathode was prepared by casting on an Al metal foil the slurry previously prepared. The coating was finally dried in vacuum oven at 130° C for enough time to ensure solvent removal. The coating thickness was set in order to obtain a final electrode thickness around 65 μm.

### Adhesion measurement on the electrodes

Peeling tests were performed by following the standard ASTM D903 to evaluate the adhesion of the electrode mixture coating on the metal foil.

### Flexibility method and measurement

Electrode flexibility was evaluated through a Mandrel Bend Test Method, derived from ASTM D 3111-99. Test strips of the electrode properly sized and conditioned, were bent 180° over a 2-mm diameter mandrel (rod) several times until cracks become visible in the electrode. The higher the number of bending times, the higher is the electrode flexibility.

**Table 1**

| Examples | Adhesion (N/cm) | Flexibility Bending times | Slurry viscosity (mPa*s) at 25°C |
|---|---|---|---|
| Composition (a) | 1.5 | - | 1291 |
| Composition (1b) | 1.4 | Higher than 10 times | 1281 |
| Composition (c) | 1.3 | - | - |
| Composition (d) | 1.1 | Higher than 10 times | 1300 |
| Polymer (F1)-A | 1.5 | 2 times | 1653 |
| Polymer (F1)-B | 1.7 | - | 2138 |
| Polymer (F2) | 0.5 | - | 492 |

The results show that the compositions according to the present invention (compositions (a) to (d)) have good values of adhesion to the electrode, comparable to that of polymer (F1) alone.

Furthermore, the compositions of the invention imparts high flexibility to the electrode prepared by coating the metal foil with said composition.

## Claims

**1.** A composition (C) comprising:

- at least one semi-crystalline fluoropolymer [polymer (F1)] comprising recurring units derived from vinylidene fluoride (VDF) in an amount of at least 50 % by mole with respect to the total moles of recurring units of polymer (F1), and recurring units derived from at least one functional hydrogenated monomer comprising at least one hydrophilic (meth)acrylic monomer (MA) of formula (I):

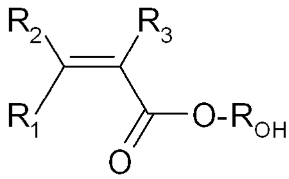

(I)

wherein:

- $R_1$, $R_2$ and $R_3$, equal to or different from each other, are independently selected from a hydrogen atom and a $C_1$-$C_3$ hydrocarbon group, and
- $R_{OH}$ is a hydrogen atom or a $C_1$-$C_5$ hydrocarbon moiety comprising at least one hydroxyl group,

in an amount of at least 0.1 % by mole, preferably at least 0.3 % by mole, even more preferably at least 0.5 % by mole, and not more than 5 % by mole with respect to the total moles of recurring units of polymer (F1),
said polymer (F1) having an intrinsic viscosity measured in dimethylformamide at 25 °C higher than 1.4 dl/g, preferably higher than 2 dl/g, even more preferably higher than 2.5 dl/g and lower than 5 dl/g; and

- at least one fluoropolymer [polymer (F2)], different from (F1), comprising recurring units derived from vinylidene fluoride (VDF) in an amount of at least 50 % by mole with respect to the total moles of recurring units of polymer (F2), and recurring units derived from at least one fluorinated monomer (FM) different from vinylidene fluoride in an amount of between 2.5 % by mole and 10% by mole % with respect to the total moles of recurring units of polymer (F2),

wherein polymer (F1) forms at least the 10% by weight over the total weight of the composition (C) and polymer (F2) forms at most 90% by weight over the total weight of the composition (C).

**2.** The composition (C) according to claim 1 wherein the at least one hydrophilic (meth)acrylic monomer (MA) complies with formula (II) here below:

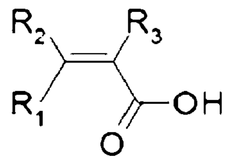

(II)

**3.** The composition (C) according to claim 2 wherein the at least one hydrophilic (meth)acrylic monomer (MA) of formula (II) is selected from the group consisting of acrylic acid, (meth)acrylic acid and mixtures thereof.

**4.** The composition (C) according to anyone of the preceding claims wherein polymer (F1) comprises recurring units derived from:

- at least 75% by moles, preferably at least 85% by moles of vinylidene fluoride (VDF).

**5.** The composition (C) according to anyone of the preceding claims wherein the fluorinated monomer (FM) is selected from the group consisting of:

- $C_2$-$C_8$ perfluoroolefins such as tetrafluoroethylene and hexafluoropropylene (HFP);
- $C_2$-$C_8$ hydrogenated fluoroolefins such as vinyl fluoride, 1,2-difluoroethylene and trifluoroethylene;
- perfluoroalkylethylenes of formula $CH_2$=CH-$R_{f0}$ wherein $R_{f0}$ is a $C_1$-$C_6$ perfluoroalkyl;
- chloro- and/or bromo- and/or iodo-$C_2$-$C_6$ fluoroolefins such as chlorotrifluoroethylene;
- (per)fluoroalkylvinylethers of formula $CF_2$=CFOR$_{f1}$ wherein $R_{f1}$ is a $C_1$-$C_6$ fluoro- or perfluoroalkyl, e.g. $CF_3$, $C_2F_5$, $C_3F_7$;
- $CF_2$=CFOX$_0$ (per)fluoro-oxyalkylvinylethers wherein $X_0$ is a $C_1$-$C_{12}$ alkyl group, a $C_1$-$C_{12}$ oxyalkyl group or a $C_1$-$C_{12}$ (per)fluorooxyalkyl group having one or more ether groups, such as perfluoro-2-propoxy-propyl group;
- (per)fluoroalkylvinylethers of formula $CF_2$=CFOCF$_2$OR$_{f2}$ wherein $R_{f2}$ is a $C_1$-$C_6$ fluoro- or perfluoroalkyl group, e.g. $CF_3$, $C_2F_5$, $C_3F_7$ or a $C_1$-$C_6$ (per)fluorooxyalkyl group having one or more ether groups such as -$C_2F_5$-O-$CF_3$;
- functional (per)fluoro-oxyalkylvinylethers of formula $CF_2$=CFOY$_0$ wherein $Y_0$ is a $C_1$-$C_{12}$ alkyl group or (per)fluoroalkyl group, a $C_1$-$C_{12}$ oxyalkyl group or a $C_1$-$C_{12}$ (per)fluorooxyalkyl group having one or more ether groups and $Y_0$ comprising a carboxylic or sulfonic acid group, in its acid, acid halide or salt form;
- fluorodioxoles, preferably perfluorodioxoles.

**6.** The composition (C) according to anyone of the preceding claims wherein the fluorinated monomer (FM) is hexafluoropropylene (HFP).

**7.** The composition (C) according to anyone of the preceding claims wherein polymer (F1) forms at least the 25% by weight over the total weight of composition (C), and polymer (F2) forms at most 75% by weight over the total weight of the composition (C).

**8.** The composition (C) according to anyone of the preceding claims wherein polymer (F2) has an intrinsic viscosity measured in dimethylformamide at 25°C which is lower than that of polymer (F1), preferably lower than 2 dl/g, more preferably lower than 1.7 dl/g.

**9.** A process for the preparation of an electrode comprising the steps of:

i. providing a metal substrate possessing two surfaces;
ii. providing a composition (C) of claims 1 to 8 in mixture with a liquid medium (L1) comprising a non-aqueous solvent;
iii. forming an electrode slurry mixture comprising:

- the liquid composition of step ii), and
- at least one electro-active compound;

iv. coating at least one surface of the metal substrate of step i. with the electrode slurry mixture of step iii.;
v. drying the coated metal substrate obtained in step iv..

**10.** A process for the preparation of a composite separator said method comprising the following steps:

I. providing a porous substrate having at least one surface;
II. providing a composition (C) of claims 1 to 8;
III. applying said composition (C) onto at least one surface of said porous substrate to provide a coating composition layer; and
IV. drying the coating composition layer obtained in step III. at a temperature of at least 60°C.

**11.** An electrode comprising a composition (C) according to anyone of claims 1 to 8.

**12.** A composite separator comprising a composition (C) according to anyone of claims 1 to 8.

**13.** An electrochemical device comprising the electrode according to claim 11.

**14.** An electrochemical device comprising the composite separator according to claim 12.

**Patentansprüche**

**1.** Zusammensetzung (C), umfassend:

- mindestens ein teilkristallines Fluorpolymer [Polymer (F1)], umfassend Wiederholungseinheiten, die sich von Vinylidenfluorid (VDF) ableiten, in einer Menge von mindestens 50 Mol-%, bezogen auf die gesamten Mole von Wiederholungseinheiten von Polymer (F1), und Wiederholungseinheiten, die sich von mindestens einem funktionellen hydrierten Monomer ableiten, welches mindestens ein hydrophiles (Meth)acryl-Monomer (MA) der Formel (I) umfasst:

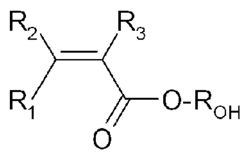

(I)

wobei:

- $R_1$, $R_2$ und $R_3$ gleich oder voneinander verschieden sind und unabhängig voneinander aus einem Wasserstoffatom und einer $C_1$-$C_3$-Kohlenwasserstoffgruppe ausgewählt sind und
- $R_{OH}$ für ein Wasserstoffatom oder eine $C_1$-$C_5$-Kohlenwasserstoffgruppierung mit mindestens einer Hydroxylgruppe steht,

in einer Menge von mindestens 0,1 Mol-%, vorzugsweise mindestens 0,3 Mol-%, weiter bevorzugt mindestens 0,5 Mol-%, und nicht mehr als 5 Mol-%, bezogen auf die gesamten Mole von Wiederholungseinheiten von Polymer (F1),
wobei das Polymer (F1) eine in Dimethylformamid bei 25 °C gemessene intrinsische Viskosität von mehr als 1,4 dl/g, vorzugsweise mehr als 2 dl/g, noch weiter bevorzugt mehr als 2,5 dl/g, und weniger als 5 dl/g aufweist; und

- mindestens ein von (F1) verschiedenes Fluorpolymer [Polymer (F2)], umfassend Wiederholungseinheiten, die sich von Vinylidenfluorid (VDF) ableiten, in einer Menge von mindestens 50 Mol-%, bezogen auf die gesamten Mole von Wiederholungseinheiten von Polymer (F2), und Wiederholungseinheiten, die sich von mindestens einem von Vinylidenfluorid verschiedenen fluorierten Monomer (FM) ableiten, in einer Menge zwischen 2,5 Mol-% und 10 Mol-%, bezogen auf die gesamten Mole von Wiederholungseinheiten von Polymer (F2),

wobei Polymer (F1) mindestens 10 Gew.-%, bezogen auf das Gesamtgewicht der Zusammensetzung (C), ausmacht

und Polymer (F2) höchstens 90 Gew.-%, bezogen auf das Gesamtgewicht der Zusammensetzung (C), ausmacht.

**2.** Zusammensetzung (C) nach Anspruch 1, wobei das mindestens eine hydrophile (Meth)acryl-Monomer (MA) der nachstehenden Formel (II) entspricht:

(II) 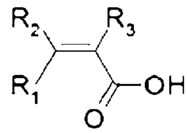 .

**3.** Zusammensetzung (C) nach Anspruch 2, wobei das mindestens eine hydrophile (Meth)acryl-Monomer (MA) der Formel (II) aus der Gruppe bestehend aus Acrylsäure, (Meth)acrylsäure und Mischungen davon ausgewählt ist.

**4.** Zusammensetzung (C) nach einem der vorhergehenden Ansprüche, wobei Polymer (F1) Wiederholungseinheiten umfasst, die sich von

- mindestens 75 Mol-%, vorzugsweise mindestens 85 Mol-%, Vinylidenfluorid (VDF)

ableiten.

**5.** Zusammensetzung (C) nach einem der vorhergehenden Ansprüche, wobei das fluorierte Monomer (FM) aus der Gruppe bestehend aus

- $C_2$-$C_8$-Perfluorolefinen wie Tetrafluorethylen und Hexafluorpropylen (HFP);
- hydrierten $C_2$-$C_8$-Fluorolefinen wie Vinylfluorid, 1,2-Difluorethylen und Trifluorethylen;
- Perfluoralkylethylenen der Formel $CH_2$=CH-$R_{f0}$, wobei $R_{f0}$ für ein $C_1$-$C_6$-Perfluoralkyl steht;
- Chlor- und/oder Brom- und/oder Iod-$C_2$-$C_6$-fluorolefinen wie Chlortrifluorethylen;
- (Per)fluoralkylvinylethern der Formel $CF_2$=CFO$R_{f1}$, wobei $R_{f1}$ für ein $C_1$-$C_6$-Fluor- oder -Perfluoralkyl, z. B. $CF_3$, $C_2F_5$, $C_3F_7$, steht;
- $CF_2$=CFO$X_0$-(Per)fluoroxyalkylvinylethern, wobei $X_0$ für eine $C_1$-$C_{12}$-Alkylgruppe, eine $C_1$-$C_{12}$-Oxyalkylgruppe oder eine $C_1$-$C_{12}$-(Per)fluoroxyalkylgruppe mit einer oder mehreren Ethergruppen, wie eine Perfluor-2-propoxypropylgruppe, steht;
- (Per)fluoralkylvinylethern der Formel $CF_2$=CFO$CF_2$O$R_{f2}$, wobei $R_{f2}$ für eine $C_1$-$C_6$-Fluor- oder -Perfluoralkylgruppe, z. B. $CF_3$, $C_2F_5$, $C_3F_7$, oder eine $C_1$-$C_6$-(Per) fluoroxyalkylgruppe mit einer oder mehreren Ethergruppen wie -$C_2F_5$-O-$CF_3$ steht;
- funktionellen (Per)fluoroxyalkylvinylethern der Formel $CF_2$=CFO$Y_0$, wobei $Y_0$ für eine $C_1$-$C_{12}$-Alkylgruppe oder (Per) fluoralkylgruppe, eine $C_1$-$C_{12}$-Oxyalkylgruppe oder eine $C_1$-$C_{12}$-(Per)fluoroxyalkylgruppe mit einer oder mehreren Ethergruppen steht und $Y_0$ eine Carbon- oder Sulfonsäuregruppe in ihrer Säure-, Säurehalogenid- oder Salzform umfasst;
- Fluordioxolen, vorzugsweise Perfluordioxolen.

**6.** Zusammensetzung (C) nach einem der vorhergehenden Ansprüche, wobei es sich bei dem fluorierten Monomer (FM) um Hexafluorpropylen (HFP) handelt.

**7.** Zusammensetzung (C) nach einem der vorhergehenden Ansprüche, wobei Polymer (F1) mindestens 25 Gew.-%, bezogen auf das Gesamtgewicht der Zusammensetzung (C), ausmacht und Polymer (F2) höchstens 75 Gew.-%, bezogen auf das Gesamtgewicht der Zusammensetzung (C), ausmacht.

**8.** Zusammensetzung (C) nach einem der vorhergehenden Ansprüche, wobei Polymer (F2) eine in Dimethylformamid bei 25 °C gemessene intrinsische Viskosität aufweist, die kleiner ist als diejenige von Polymer (F1), vorzugsweise kleiner als 2 dl/g, weiter bevorzugt kleiner als 1,7 dl/g.

**9.** Verfahren zur Herstellung einer Elektrode, das folgende Schritte umfasst:

i. Bereitstellen eines Metallsubstrats mit zwei Oberflächen;
ii. Bereitstellen einer Zusammensetzung (C) gemäß den Ansprüchen 1 bis 8 im Gemisch mit einem flüssigen

Medium (L1), das ein nichtwässriges Lösungsmittel umfasst;
iii. Bilden einer Elektrodenaufschlämmungsmischung, umfassend:

- die flüssige Zusammensetzung aus Schritt ii) und
- mindestens eine elektroaktive Verbindung;

iv. Beschichten mindestens einer Oberfläche des Metallsubstrats aus Schritt i. mit der Elektrodenaufschlämmungsmischung aus Schritt iii.;
v. Trocknen des in Schritt iv. erhaltenen beschichteten Metallsubstrats.

**10.** Verfahren zur Herstellung eines Verbundseparators, das die folgenden Schritte umfasst:

I. Bereitstellen eines porösen Substrats mit mindestens einer Oberfläche;
II. Bereitstellen einer Zusammensetzung (C) gemäß den Ansprüchen 1 bis 8;
III. Aufbringen der Zusammensetzung (C) auf mindestens eine Oberfläche des porösen Substrats zur Bereitstellung einer Beschichtungszusammensetzungsschicht; und
IV. Trocknen der in Schritt III. erhaltenen Beschichtungszusammensetzungsschicht bei einer Temperatur von mindestens 60 °C.

**11.** Elektrode, umfassend eine Zusammensetzung (C) nach einem der Ansprüche 1 bis 8.

**12.** Verbundseparator, umfassend eine Zusammensetzung (C) nach einem der Ansprüche 1 bis 8.

**13.** Elektrochemische Vorrichtung, umfassend die Elektrode nach Anspruch 11.

**14.** Elektrochemische Vorrichtung, umfassend den Verbundseparator nach Anspruch 12.

**Revendications**

**1.** Composition (C) comprenant :

- au moins un fluoropolymère semi-cristallin [polymère (F1)] comprenant des motifs répétitifs issus du fluorure de vinylidène (VDF) en une quantité d'au moins 50 % en moles par rapport au nombre total de moles de motifs répétitifs du polymère (F1), et des motifs répétitifs issus d'au moins un monomère hydrogéné fonctionnalisé comprenant au moins un monomère (méth)acrylique hydrophile (MA) de formule (I) :

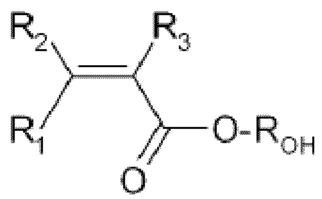

(I)

- $R_1$, $R_2$ et $R_3$, égaux ou différents les uns des autres, étant indépendamment choisis parmi un atome d'hydrogène et un groupe hydrocarboné en $C_{1-3}$, et
- $R_{OH}$ étant un atome d'hydrogène ou un groupement hydrocarboné en $C_{1-5}$ comprenant au moins un groupe hydroxyle,

en une quantité d'au moins 0,1 % en moles, préférablement d'au moins 0,3 % en moles, encore plus préférablement d'au moins 0,5 % en moles, et inférieure à 5 % en moles par rapport au nombre total de moles de motifs répétitifs du polymère (F1),
ledit polymère (F1) ayant une viscosité intrinsèque mesurée dans le diméthylformamide à 25 °C supérieure à 1,4 dl/g, préférablement supérieure à 2 dl/g, encore plus préférablement supérieure à 2,5 dl/g et inférieure à 5 dl/g ; et

- au moins un fluoropolymère [polymère (F2)], différent de (F1), comprenant des motifs répétitifs issus du fluorure

de vinylidène (VDF) en une quantité d'au moins 50 % en moles par rapport au nombre total de moles de motifs répétitifs du polymère (F2), et des motifs répétitifs issus d'au moins un monomère fluoré (FM) différent du fluorure de vinylidène en une quantité comprise entre 2,5 % en moles et 10 % en moles par rapport au nombre total de moles de motifs répétitifs du polymère (F2),

le polymère (F1) formant au moins les 10 % en poids sur le poids total de la composition (C) et le polymère (F2) formant au moins 90 % en poids sur le poids total de la composition (C).

2. Composition (C) selon la revendication 1, l'au moins un monomère (méth)acrylique hydrophile (MA) répondant à la formule (II) ci-dessous :

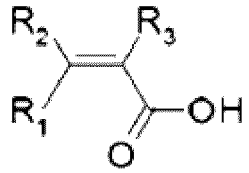

(II) .

3. Composition (C) selon la revendication 2, l'au moins un monomère (méth)acrylique hydrophile (MA) de formule (II) étant choisi dans le groupe constitué par l'acide acrylique, l'acide (méth)acrylique et des mélanges correspondants.

4. Composition (C) selon l'une quelconque des revendications précédentes, le polymère (F1) comprenant des motifs répétitifs issus de :

- au moins 75 % en moles, préférablement au moins 85 % en moles de fluorure de vinylidène (VDF).

5. Composition (C) selon l'une quelconque des revendications précédentes, le monomère fluoré (FM) étant choisi dans le groupe constitué par :

- $C_2$-$C_8$ perfluorooléfines telles que tétrafluoroéthylène et hexafluoropropylène (HFP) ;
- $C_2$-$C_8$ fluorooléfines hydrogénées telles que fluorure de vinyle, 1,2-difluoroéthylène et trifluoroéthylène ;
- perfluoroalkyléthylènes de formule $CH_2$=CH-$R_{f0}$, $R_{f0}$ étant un $C_1$-$C_6$ perfluoroalkyle ;
- chloro- et/ou bromo- et/ou iodo-$C_2$-$C_6$fluorooléfines telles que chlorotrifluoroéthylène ;
- (per) fluoroalkylvinyléthers de formule $CF_2$=CFO$R_{f1}$, $R_{f1}$ étant un $C_1$-$C_6$ fluoro- ou perfluoroalkyle, par exemple $CF_3$, $C_2F_5$, $C_3F_7$ ;
- $CF_2$=CFO$X_0$ (per)fluoro-oxyalkylvinyléthers, $X_0$ étant un groupe $C_1$-$C_{12}$ alkyle, un groupe $C_1$-$C_{12}$ oxyalkyle ou un groupe $C_1$-$C_{12}$ (per) fluorooxyalkyle ayant un ou plusieurs groupes éther, tel qu'un groupe perfluoro-2-propoxy-propyle ;
- (per)fluoroalkylvinyléthers de formule $CF_2$=CFO$CF_2$O$R_{f2}$, $R_{f2}$ étant un groupe $C_1$-$C_6$ fluoro- ou perfluoroalkyle, par exemple $CF_3$, $C_2F_5$, $C_3F_7$ ou un groupe $C_1$-$C_6$(per)fluorooxyalkyle ayant un ou plusieurs groupes éther tels que -$C_2F_5$-O-$CF_3$ ;
- (per)fluoro-oxyalkylvinyléthers fonctionnalisés de formule $CF_2$=CFO$Y_0$, $Y_0$ étant un groupe $C_1$-$C_{12}$ alkyle ou un groupe (per)fluoroalkyle, un groupe $C_1$-$C_{12}$ oxyalkyle ou un groupe $C_1$-$C_{12}$ (per)fluorooxyalkyle ayant un ou plusieurs groupes éther et $Y_0$ comprenant un groupe acide carboxylique ou sulfonique, sous sa forme d'acide d'halogénures d'acide ou de sel ;
- fluorodioxoles, préférablement perfluorodioxoles.

6. Composition (C) selon l'une quelconque des revendications précédentes, le monomère fluoré (FM) étant l'hexafluoropropylène (HFP).

7. Composition (C) selon l'une quelconque des revendications précédentes, le polymère (F1) formant au moins les 25 % en poids sur le poids total de la composition (C), et le polymère (F2) formant au plus 75 % en poids sur le poids total de la composition (C).

8. Composition (C) selon l'une quelconque des revendications précédentes, le polymère (F2) ayant une viscosité intrinsèque mesurée dans le diméthylformamide à 25 °C qui est inférieure à celle du polymère (F1), préférablement

inférieure à 2 dl/g, plus préférablement inférieure à 1,7 dl/g.

**9.** Procédé pour la préparation d'une électrode comprenant les étapes de :

i. fourniture d'un substrat métallique possédant deux surfaces ;
ii. fourniture d'une composition (C) selon les revendications 1 à 8 en mélange avec un milieu liquide (L1) comprenant un solvant non aqueux ;
iii. formation d'un mélange en suspension d'électrode comprenant :

- la composition liquide de l'étape ii), et
- au moins un composé électroactif ;

iv. revêtement d'au moins une surface du substrat métallique de l'étape i. avec le mélange en suspension d'électrode de l'étape iii. ;
v. séchage du substrat métallique revêtu obtenu dans l'étape iv.

**10.** Procédé pour la préparation d'un séparateur composite, ledit procédé comprenant les étapes suivantes :

I. fourniture d'un substrat poreux ayant au moins une surface ;
II. fourniture d'une composition (C) selon les revendications 1 à 8 ;
III. application de ladite composition (C) sur au moins une surface dudit substrat poreux pour fournir une couche de composition de revêtement ; et
IV. séchage de la couche de composition de revêtement obtenue dans l'étape III. à une température d'au moins 60 °C.

**11.** Électrode comprenant une composition (C) selon l'une quelconque des revendications 1 à 8.

**12.** Séparateur composite comprenant une composition (C) selon l'une quelconque des revendications 1 à 8.

**13.** Dispositif électrochimique comprenant l'électrode selon la revendication 11.

**14.** Dispositif électrochimique comprenant le séparateur composite selon la revendication 12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20020197536 A
- WO 2013010936 A